# EUROPÄISCHE PATENTANMELDUNG

(11) **EP 4 650 832 A1**
(43) Veröffentlichungstag der Anmeldung: **19.11.2025**
(21) Anmeldenummer: 25175626.8
(22) Anmeldetag: 12.05.2025
(51) Int. Cl.: G01V 7/00

(54) **LICHTREFLEKTORELEMENT, REFLEKTORANORDNUNG UND QUANTEN-GRADIOMETER**

(30) Priorität: 14.05.2024 DE 102024113374; 07.03.2025 DE 102025108762
(71) Anmelder: Deutsches Zentrum für Luft- und Raumfahrt e.V., 53227 Bonn-Oberkassel (DE)
(72) Erfinder: Klempt, Carsten, 30966 Hemmingen (DE); Schubert, Christian, 30167 Hannover (DE); Kruse, Jens, 30459 Hannover (DE); Herr, Waldemar, 30625 Hannover (DE)
(74) Vertreter: Günther, Constantin

(57) **Zusammenfassung**

Die Erfindung betrifft ein Lichtreflektorelement, das mehrere Reflektorflächen hat, die in einem Winkel zu einer vordefinierten Lichteinstrahlrichtung des Lichtreflektorelements ausgerichtet sind, wobei die Reflektorflächen mit gleichmäßigem Winkelabstand zueinander ringförmig um ein Zentrum des Lichtreflektorelements angeordnet sein können, wobei die Reflektorflächen bezüglich des Zentrums des Lichtreflektorelements einander gegenüberliegend angeordnet sind, sodass in Lichteinstrahlrichtung (L) einstrahlendes Licht durch die Reflektorflächen in Lichtstrahlen abgelenkt wird, die in unterschiedlichen Raumrichtungen aufeinander zu verlaufen und sich in einer Zentrumsachse treffen, die in Lichteinstrahlrichtung durch das Zentrum hindurch verläuft.

Die Erfindung betrifft außerdem eine Reflektoranordnung mit wenigstens zwei solchen Reflektorelementen und ein Quanten-Gradiometer. Allgemein betrifft die Erfindung das Gebiet der Atominterferometer, insbesondere mit magnetooptischer Falle (MOT - magneto-optical trap). Insbesondere betrifft die Erfindung atominterferometrische Gravimeter sowie damit gebildete Gradiometer.

## Beschreibung

Die Erfindung betrifft ein Lichtreflektorelement, das mehrere Reflektorflächen hat, die in einem oder mehreren vordefinierten Winkeln bezüglich einer vordefinierten Lichteinstrahlrichtung des Lichtreflektorelements ausgerichtet sind, wobei die Reflektorflächen z.B. ringförmig um ein Zentrum des Lichtreflektorelements angeordnet sind, wobei die Reflektorflächen bezüglich des Zentrums des Lichtreflektorelements einander gegenüberliegend angeordnet sind, sodass in Lichteinstrahlrichtung einstrahlendes Licht durch die Reflektorflächen in Lichtstrahlen abgelenkt wird, die in unterschiedlichen Raumrichtungen aufeinander zu verlaufen und sich in einer Zentrumsachse treffen, die in Lichteinstrahlrichtung durch das Zentrum des Lichtreflektorelements hindurch verläuft. Die Zentrumsachse ist somit parallel zur Lichteinstrahlrichtung ausgerichtet. Es können sich dabei die durch die Reflektorflächen abgelenkten Lichtstrahlen mehrerer oder aller Reflektorflächen an demselben Punkt der Zentrumsachse treffen, der dann eine Wechselwirkungszone zum Kühlen gefangener Atome bildet.

Die Erfindung betrifft außerdem eine Reflektoranordnung mit wenigstens zwei solchen Reflektorelementen und ein Quanten-Gradiometer. Die Erfindung betrifft außerdem ein Atomgerät, z.B. ein Atominterferometer oder ein Quanten-Gradiometer, mit wenigstens einem solchen Lichtreflektorelement. Allgemein betrifft die Erfindung das Gebiet beliebiger Atomgeräte mit Atomfalle und in der Atomfalle lasergekühlten Atomen, insbesondere mit magnetooptischer Falle (MOT - magneto-optical trap). Insbesondere betrifft die Erfindung atominterferometrische Gravimeter sowie damit gebildete Gradiometer.

Atominterferometrische Gravimeter bieten langzeitstabile, absolute Schweremessungen. Ihr Messprinzip bietet im Vergleich zu den verbreiteten Lasergravimetern (FG5X) die Möglichkeit quasikontinuierlicher Datenaufnahme über einen längeren Zeitraum sowie die Perspektive einer höheren Genauigkeit. Es wurden bereits transportable und kommerzielle Geräte realisiert sowie auch auf einer mobilen Plattform wie einem Schiff betrieben. Ein wesentlicher Bestandteil eines atominterferometrischen Gravimeters ist die Quelle für kalte Atome. Typischerweise basieren diese auf Laserkühlung in magnetooptischen Fallen und Polarisationsgradientenkühlung. Eine dreidimensionale magnetooptische Falle benötigt neben Magnetfeldern auch Lichtfelder, die typischerweise auf den drei Raumachsen jeweils anti-parallel eingestrahlt werden, um eine sogenannte Wechselwirkungszone zum Kühlen gefangener Atome zu bilden. Dies impliziert einen vergleichsweise komplexen Aufbau mit mehreren Strahlformungsoptiken und entsprechenden optischen Zugängen zum Vakuumsystem, in dem die Atome gefangen und gekühlt werden. Speziell ausgelegte Pyramiden- oder Gitterstrukturen wurden erfolgreich dafür verwendet, aus einem einzigen einfallenden Laserstrahl eine Strahlgeometrie zu schaffen, die effektiv in allen drei Raumachsen kühlen kann.

Eine wichtige Anwendung von Gravimetern ist deren Verwendung für Gradiometer, bei denen zwei räumlich getrennte Gravimeter gleichzeitig betrieben werden. Aus dem Differenzsignal lässt sich die erste Ableitung der Schwerkraft ableiten, der Gravitationsgradient. Für das Differenzsignal ergibt sich eine gemeinsame Rauschunterdrückung (common-noise rejection), bei der das Gradiometersignal nur von technischen Rauschquellen verschlechtert wird, die unterschiedlich auf die beiden Gravimeter wirken. Dabei ist von besonderer Bedeutung, dass die beiden Gravimeter möglichst symmetrisch betrieben werden, um maximal von der beschriebenen Rauschunterdrückung zu profitieren.

Der Stand der Technik in der Gradiometrie mit kompakten Atominterferometern wird durch die Veröffentlichung WO 2014/106811 A2 gut beschrieben. Das dortige Gradiometer besteht aus zwei (oder drei) Wechselwirkungszonen, bei denen jeweils Laserlicht aus allen sechs Raumrichtungen auf ein atomares Ensemble gerichtet wird. Es wird hierzu ein einzelner Laserstrahl eingesetzt, der von zwei (bzw. drei) Lichtreflektorelementen jeweils auf die Wechselwirkungszonen gerichtet wird. Die beiden Lichtreflektorelemente sind so arrangiert, dass das zweite Lichtreflektorelement hinter einer zentralen Bohrung des ersten Lichtreflektorelements liegt (bzw. das dritte Lichtreflektorelement eine zentrale Bohrung für das zweite Lichtreflektorelement hat).

Diese Lösung hat den Nachteil, dass der einzelne Laserstrahl zum Betrieb des Gradiometers räumlich beide Lichtreflektorelemente abdecken muss. Daraus ergeben sich folgende Nachteile:
- Vergleichsweise große abzudeckende Fläche für den Laserstrahl
- Asymmetrische Intensitätsverteilung in den Wechselwirkungszonen
- Entsprechende Asymmetrien in der Zahl der Atome in den beiden Wechselwirkungszonen
- Entsprechende Verschlechterung des Gradiometersignals durch systematische Effekte
- Vergrößerung der Apparatur mit Nachteilen für die Kompaktheit
- Größere benötigte Laserleistung und damit stärkere Restriktionen für den kompakten Aufbau und die Leistungsaufnahme

Eine in der WO 2014/106811 A2 alternativ vorgeschlagene Lösung sieht die Kombination aus einem teilweise reflektierenden und transmittierenden Element sowie einem vollständig reflektierenden Element vor. Damit lässt sich der oben genannte Nachteil der großen abzudeckenden Fläche vermeiden, allerdings auf Kosten der Einbringung des teilweise reflektierenden und transmittierenden Elements in das Vakuumsystem. Dieses Element muss aus lichtdurchlässigem Material gefertigt werden und benötigt eine Halterung, die die lichtdurchlässigen Elemente sicher in Position und Ausrichtung fixiert. Im Gegensatz zu Spiegeln können die teilweise reflektierenden Elemente nicht monolithisch gefertigt werden. Resultierende Fertigungs- bzw. Justagetoleranzen beeinflussen die Qualität des Messgerätes, z.B. statistische Fehler. Weiterhin bedeutet ein nicht-monolithischer Aufbau eine komplexere Fertigung, anders als z.B. ein 3D-Druck oder eine Ausfräsung. Zuletzt ist die Kombination von teilweise- und vollreflektierenden Elementen wiederum eine asymmetrische Anordnung mit den entsprechenden Nachteilen für die Unterdrückung des gemeinsamen Rauschens (Common-Mode-Noise-Rejection), was wiederum die Signalqualität beeinflusst. Außerdem ist in diesem Fall die Fertigung zweier (oder mehrerer) verschiedener Elemente notwendig.

Der Erfindung liegt somit die Aufgabe zugrunde, ein verbessertes Lichtreflektorelement, eine Reflektoranordnung und ein damit gebildetes Quanten-Gradiometer anzugeben.

Diese Aufgabe wird gemäß Anspruch 1 durch ein Lichtreflektorelement der eingangs genannten Art gelöst, wobei zwischen in Umfangsrichtung benachbarten Reflektorflächen jeweils ein lichttransmittierender Abschnitt angeordnet ist, durch den das in Lichteinstrahlrichtung einfallende Licht durch das Lichtreflektorelement hindurchstrahlen kann. Die Reflektorflächen können somit in Umfangsrichtung um die Zentrumsachse herum mit gleichmäßigem Winkelabstand zueinander angeordnet sein. Beim erfindungsgemäßen Lichtreflektorelement wird somit nicht nur, wie im Stand der Technik, ein zentraler Innenbereich des Lichtreflektorelements licht-transmittierend ausgebildet, sondern es werden alternativ oder zusätzlich Ausschnitte zwischen den Reflektorflächen in Umfangsrichtung geschaffen, die lichttransmittierend sind. Durch eine solche Gestaltung des Lichtreflektorelements können sämtliche der oben genannten Nachteile der WO 2014/106811 A2 überwunden werden.

Die Erfindung ermöglicht eine verbesserte Konstruktion der Lichtreflektorelemente, bei der die Aufteilung des verfügbaren Laserlichts nicht durch eine radiale bzw. transmittierende, sondern durch eine winkelabhängige Segmentierung der Reflektorflächen erreicht wird. Dies ermöglicht eine Symmetrie der optischen Konfiguration. Gleichzeitig reduziert sich die Komplexität der Lichtreflektorelemente, die nicht zwangsweise aus lichtdurchlässigem Material gefertigt werden müssen und für alle zwei, drei oder mehr Wechselwirkungszonen identisch ausgelegt werden können. Dadurch vereinfacht sich die Fertigung. Die Symmetrie durch Verwendung identischer optischer Elemente reduziert weiterhin differentielle Fehler, die andernfalls die Signalqualität beeinflussen könnten.

Das Lichtreflektorelement kann z.B. mit paarweise angeordneten Reflektorflächen ausgebildet sein. In diesem Fall kann das Lichtreflektorelement wenigstens zwei Paare von Reflektorflächen hat, wobei die Reflektorflächen z.B. in einem 45°-Winkel zu einer vordefinierten Lichteinstrahlrichtung des Lichtreflektorelements ausgerichtet sind, wobei die Reflektorflächen mit gleichmäßigem Winkelabstand zueinander ringförmig um ein Zentrum des Lichtreflektorelements angeordnet sind, wobei die Reflektorflächen eines Paares von Reflektorflächen jeweils symmetrisch bezüglich des Zentrums des Lichtreflektorelements einander gegenüberliegend angeordnet sind, sodass in Lichteinstrahlrichtung einstrahlendes Licht durch die Paare von Reflektorflächen in Lichtstrahlen abgelenkt wird, die wenigstens in zwei orthogonal zueinander angeordneten Raumachsen verlaufen und sich in einer Zentrumsachse treffen, die in Lichteinstrahlrichtung durch das Zentrum hindurch verläuft.

Es ist auch möglich, das Lichtreflektorelement nicht mit paarweise angeordneten Reflektorflächen auszubilden. Beispielsweise kann das Lichtreflektorelement drei Reflektorflächen, die mit gleichmäßigem Winkelabstand (d.h. 120 Grad) zueinander ringförmig um das Zentrum des Lichtreflektorelements angeordnet sind.

Die Reflektorflächen sind dazu eingerichtet, Licht zu reflektieren, insbesondere mit einem Reflexionsgrad von im Wesentlichen 100%. Die Reflektorflächen können z.B. wie Spiegel ausgebildet sein. Die Reflektorflächen, die in einem 45°-Winkel oder in einem anderen Winkel zu der Lichteinstrahlrichtung des Reflektorelements ausgerichtet sind, können als einheitliche, flächig durchgehende Reflektorflächen oder als eine Vielzahl von Einzelreflektorflächen, die gestaffelt nebeneinander an dem Reflektorelement angeordnet sind, ausgebildet sein.

Gemäß einer vorteilhaften Ausgestaltung der Erfindung ist vorgesehen, dass einer, mehrere oder alle der lichttransmittierenden Abschnitte als Freiraum ausgebildet ist, in dem kein Material angeordnet ist. Dies hat den Vorteil, dass das Lichtreflektorelement besonders einfach gestaltet und hergestellt werden kann. Alternativ kann in einem, mehreren oder allen lichttransmittierenden Abschnitten auch ein Füllmaterial angeordnet sein, das lichtdurchlässig ist, z.B. ein Glas- oder Kunststoffmaterial.

Gemäß einer vorteilhaften Ausgestaltung der Erfindung ist vorgesehen, dass die Reflektorflächen in einem Abstand von dem Zentrum angeordnet sind, so dass um das Zentrum herum ein zentraler lichttransmittierender Abschnitt gebildet ist, durch den das in Lichteinstrahlrichtung einfallende Licht durch das Lichtreflektorelement hindurchstrahlen kann. Durch den zentralen lichttransmittierenden Abschnitt kann beispielsweise das Licht der Lichtquelle zu einem in Lichteinstrahlrichtung hinter dem Lichtreflektorelement oder einem dahinter angeordneten weiteren Lichtreflektorelement angeordneten Spiegel geleitet werden, durch den das Licht für die Durchführung der Interferometrie zurückreflektiert wird.

Das Lichtreflektorelement kann mehrteilig aus verschiedenen Einzelteilen zusammengesetzt sein. Beispielsweise können die einzelnen Reflektorflächen als verspiegelte Bauteile auf einem Basisbauteil aufgebracht sein, das als Träger für die Reflektorflächen dient.

Gemäß einer vorteilhaften Ausgestaltung der Erfindung ist vorgesehen, dass das Lichtreflektorelement als ein monolithisches Bauteil ausgebildet ist. Dies erlaubt eine sehr einfache und kostengünstige Herstellung eines Lichtreflektorelements, das zudem mechanisch sehr stabil ist.

Die eingangs genannte Aufgabe wird außerdem gelöst durch eine Reflektoranordnung aufweisend wenigstens ein erstes Lichtreflektorelement und wenigstens ein zweites Lichtreflektorelement, wobei das zweite Lichtreflektorelement in Lichteinstrahlrichtung hinter dem ersten Lichtreflektorelement angeordnet ist. Dabei ist das erste Lichtreflektorelement als Lichtreflektorelement der zuvor beschrieben Art ausgebildet, d.h. als erfindungsgemäßes Lichtreflektorelement. Das zweite Lichtreflektorelement kann auch als erfindungsgemäßes Lichtreflektorelement ausgebildet sein, es kann aber auch ganz ohne lichttransmittierende Abschnitte zwischen den in Umfangsrichtung benachbarten Reflektorflächen oder mit weniger solchen lichttransmittierenden Abschnitten ausgebildet sein. Im Übrigen kann das zweite Lichtreflektorelement die erfindungsgemäßen Merkmale aufweisen. Dabei kann durch die lichttransmittierenden Abschnitte des ersten Lichtreflektorelements hindurchstrahlendes Licht auf die Reflektorflächen des zweiten Lichtreflektorelements treffen. Durch eine solche Reflektoranordnung können vorteilhaft zwei Wechselwirkungszonen eines Quanten-Gradiometers gebildet werden. Dabei ist die erforderliche abzudeckende Fläche für den Laserstrahl relativ gering. Zudem kann eine symmetrische Intensitätsverteilung in den Wechselwirkungszonen auf einfache Weise realisiert werden.

Vorteilhafterweise können das erste und das zweite Lichtreflektorelement hinsichtlich der Dimensionen ihrer optisch wirksamen Reflektorflächen gleich groß gestaltet werden. Vorteilhaft ist ferner, wenn das zweite Lichtreflektorelement in Lichteinstrahlrichtung entlang derselben Zentrumsachse hinter dem ersten Lichtreflektorelement angeordnet ist, also konzentrisch zu dem ersten Lichtreflektorelement angeordnet ist.

Gemäß einer vorteilhaften Ausgestaltung der Erfindung ist vorgesehen, dass in Lichteinstrahlrichtung hinter dem zweiten Lichtreflektorelement wenigstens ein Spiegel angeordnet ist, durch den in Lichteinstrahlrichtung einstrahlendes Licht entgegengesetzt zur Lichteinstrahlrichtung zurückreflektiert wird. Durch den Spiegel kann die dritte Raumkomponente der sich in einer Wechselwirkungszone treffenden Lichtstrahlen realisiert werden. Zudem kann hierdurch die Interferometrie durchgeführt werden.

Die eingangs genannte Aufgabe wird außerdem gelöst durch ein Quanten-Gradiometer mit einer magnetooptischen Falle, die wenigstens zwei Wechselwirkungszonen zum Kühlen gefangener Atome durch in jeweils drei Raumrichtungen aus entgegengesetzten Richtungen auf die gefangenen Atome einstrahlendes Laserlicht hat, wobei das Quanten-Gradiometer eine Reflektoranordnung der zuvor erläuterten Art hat, wobei eine erste Wechselwirkungszone durch das erste Lichtreflektorelement und eine zweite Wechselwirkungszone durch das zweite Lichtreflektorelement gebildet ist. Auch hierdurch können die zuvor erläuterten Vorteile realisiert werden.

Die eingangs genannte Aufgabe wird außerdem gelöst durch ein Atomgerät, insbesondere Atominterferometer, mit wenigstens einer Laserlichtquelle und einer Atomfalle, die wenigstens eine erste Wechselwirkungszone zum Kühlen gefangener Atome durch aus entgegengesetzten Richtungen auf die gefangenen Atome einstrahlendes Laserlicht der Laserlichtquelle hat, wobei das Atomgerät ein erstes Lichtreflektorelement der zuvor erläuterten Art hat, wobei die Lichtabstrahlrichtung der Laserlichtquelle in der vordefinierten Lichteinstrahlrichtung des ersten Lichtreflektorelements ausgerichtet ist, wobei die erste Wechselwirkungszone wenigstens zum Teil durch das erste Lichtreflektorelement gebildet ist. Auch hierdurch können die zuvor erläuterten Vorteile realisiert werden. Das Atomgerät kann ein beliebiges Atomgerät mit in der Atomfalle lasergekühlten Atomen sein. Die Atomfalle kann als magnetooptische Falle (MOT) ausgebildet sein.

Die Atomfalle kann als dreidimensional wirkende Atomfalle (z.B. 3D-MOT) ausgebildet sein, wobei die vektoriellen Anteile des aus entgegengesetzten Richtungen auf die gefangenen Atome einstrahlenden Laserlichts in der ersten Wechselwirkungszone alle Raumachsen umfassen. Auch hierdurch kann der Aufbau des Atomgeräts vereinfacht werden.

Die magnetooptische Falle fungiert dabei als Atomfalle, die dazu eingerichtet ist, eine Atomwolke zu fangen. Die magnetooptische Falle weist eine Magnetfeldvorrichtung auf, um damit einen magnetisch wirksamen Teil der Atomfalle zu realisieren. Ferner weist die magnetooptische Falle wenigstens eine steuerbare erste Lichtquelle auf der Seite des ersten Lichtreflektorelements auf, z.B. einen Laser, durch den Licht in der vordefinierten Lichteinstrahlrichtung auf die Lichtreflektorelemente bzw. die Reflektoranordnung abgestrahlt wird. Hierdurch wird die Laserkühlung der gefangenen Atome in den Wechselwirkungszonen realisiert.

Gemäß einer vorteilhaften Ausgestaltung der Erfindung ist vorgesehen, dass das Atomgerät wenigstens zwei Wechselwirkungszonen zum Kühlen gefangener Atome durch aus entgegengesetzten Richtungen auf die gefangenen Atome einstrahlendes Laserlicht hat, wobei das Atomgerät ein zweites Lichtreflektorelement hat, das in Lichteinstrahlrichtung hinter dem ersten Lichtreflektorelement angeordnet ist, wobei eine zweite Wechselwirkungszone wenigstens zum Teil durch das zweite Lichtreflektorelement gebildet ist. Das Atomgerät kann z.B. eine Reflektoranordnung der zuvor beschriebenen Art haben. Das zweite Lichtreflektorelement kann als erfindungsgemäßes Lichtreflektorelement, wie zuvor beschrieben, ausgebildet sein oder als ein anders gestaltetes Lichtreflektorelement, z.B. ein Lichtreflektorelement gemäß dem Stand der Technik. Das Atomgerät kann z.B. als Quanten-Gradiometer ausgebildet sein.

Das Lichtreflektorelement kann insbesondere winkelabhängig segmentiert sein. In Umfangsrichtung um die Zentrumsachse kann je nach Winkellage entweder eine Reflektorflächen oder ein lichttransmittierender Abschnitt angeordnet sein. In dem Fall, dass durch die Reflektoranordnung zwei Wechselwirkungszonen gebildet werden sollen, kann das erste Lichtreflektorelement beispielsweise jeweils über einen Umfangwinkelabschnitt von 45° jeweils eine Reflektorfläche und im Wechsel damit einen lichttransmittierenden Abschnitt haben. Das zweite Lichtreflektorelement kann wie erwähnt ohne lichttransmittierende Abschnitte ausgebildet sein, sodass durch die Reflektorflächen der gesamte Umfangswinkelbereich abgedeckt sein kann. Das zweite Lichtreflektorelement kann auch hinsichtlich der Aufteilung in Reflektorflächen und lichttransmittierende Abschnitte über die Umfangwinkelkoordinate identisch ausgebildet sein wie das erste Lichtreflektorelement. In diesem Fall ist es vorteilhaft, das zweite Lichtreflektorelement um die Zentrumsachse um 45° gedreht zu dem ersten Lichtreflektorelement anzuordnen, sodass das vom ersten Lichtreflektorelement durch die lichttransmittierenden Abschnitte hindurchgelassenes Licht gezielt auf die Reflektorflächen des zweiten Lichtreflektorelements trifft.

Die Reflektoranordnung kann auch mit mehr als zwei Wechselwirkungszonen ausgebildet sein, z.B. mit drei Wechselwirkungszonen. Eine solche Anordnung ermöglicht neben einer Messung der Gravitationsbeschleunigung (Gravimetrie) und deren Ableitung (Gradiometrie) auch die Messung höherer Ordnungen. In diesem Fall ist es vorteilhaft, das erste Lichtreflektorelement über die Umfangswinkelkoordinate in zwölf gleichgroße Kreissektoren aufzuteilen. In diesem Fall sind beim ersten Lichtreflektorelement nur vier der zwölf Kreissektoren als Reflektorflächen ausgebildet, die übrigen Kreissektoren sind lichttransmittierende Abschnitte. Das dahinter angeordnete zweite Lichtreflektorelement kann dann vergleichbar hinsichtlich der Aufteilung in Reflektorelemente und lichttransmittierende Abschnitte ausgebildet sein wie das erste Reflektorelement. In diesem Fall wird das zweite Lichtreflektorelement um 30° um die Zentrumsachse gedreht zu dem ersten Lichtreflektorelement angeordnet. In Lichteinstrahlrichtung wird dann hinter dem zweiten Lichtreflektorelement ein drittes Lichtreflektorelement angeordnet, das wahlweise mit, ohne oder mit weniger lichttransmittierenden Abschnitten zwischen den Reflektorflächen ausgebildet sein kann. In einer vorteilhaften Ausgestaltung kann auch beim dritten Reflektorelement eine Umfangswinkel-abhängige Aufteilung in zwölf gleiche Sektoren realisiert sein. Das dritte Lichtreflektorelement kann um 30° um die gemeinsame Zentrumsachse gedreht zu dem zweiten Lichtreflektorelement angeordnet sein.

Statt eines Spiegels hinter dem in Lichteinstrahlrichtung letzten Lichtreflektorelement (zweites oder drittes Lichtreflektorelement) der Reflektoranordnung kann dort eine zweite Lichtquelle angeordnet sein, die Licht in die entgegengesetzte Richtung entlang der Zentrumsachse abstrahlt, d.h. in eine Richtung entgegengesetzt zur Lichteinstrahlrichtung.

Es ist auch möglich, auf der Seite des ersten Lichtreflektorelements verschiedene erste Lichtquellen für die Erzeugung der Wechselwirkungszonen, d.h. für die Kühlung der Atome mittels Lichts, und für die Interferometrie einzusetzen. Eine erste Lichtquelle für die Kühlung der Atome muss dann lediglich im äußeren Umfangsbereich Licht auf die Reflektorflächen strahlen. Eine weitere erste Lichtquelle für die Interferometrie kann im Zentrum Licht abstrahlen, sodass deren Licht nur durch den zentralen lichttransmittierenden Abschnitt strahlt.

Die zuvor erläuterten Varianten können auch miteinander kombiniert werden.

Die Erfindung wird nachfolgend anhand von Ausführungsbeispielen unter Verwendung von Zeichnungen näher erläutert.

Es zeigen
- Figur 1: eine Reflektoranordnung mit zwei Lichtreflektorelementen,
- Figur 2: ein Quanten-Gradiometer in stark schematisierter Darstellung,
- Figur 3: die Lichtstrahlengänge in der Reflektoranordnung in seitlicher Schnittansicht.

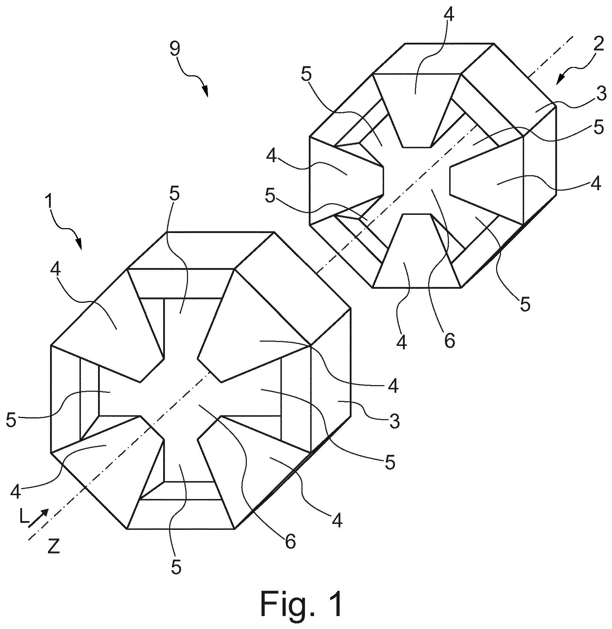

Die Figur 1 zeigt eine Reflektoranordnung 9 mit zwei Lichtreflektorelementen 1, 2, die in einer vordefinierten Lichteinstrahlrichtung L der Lichtreflektorelemente 1, 2 hintereinander angeordnet sind. In Lichteinstrahlrichtung L befindet sich zunächst ein erstes Lichtreflektorelement 1 und dahinter ein zweites Lichtreflektorelement 2.

Die Lichtreflektorelemente 1, 2 haben jeweils einen Basiskörper 3, an dem mehrere über eine Umfangswinkelkoordinate gleichmäßig verteilt angeordnete Reflektorflächen 4 angeordnet sind, die in Richtung entgegengesetzt zur Lichteinstrahlrichtung L weisen. Die Reflektorflächen 4 sind jeweils paarweise gegenüberliegend angeordnet, d.h. zwei gegenüberliegende Reflektorflächen 4 bilden ein Paar von Reflektorflächen. Die Reflektorflächen 4 eines Paares sind jeweils symmetrisch bezüglich eines Zentrums des Lichtreflektorelements 1, 2 einander gegenüberliegend angeordnet, insbesondere punktsymmetrisch oder spiegelsymmetrisch. Das Zentrum eines Lichtreflektorelements 1, 2 wird in Figur 1 durch eine Zentrumsachse Z verdeutlicht. Die Zentrumsachse Z verläuft durch das Zentrum beider Lichtreflektorelemente 1, 2 in Lichteinstrahlrichtung L. Die Lichtreflektorelemente 1, 2 sind somit konzentrisch zueinander angeordnet.

Jeweils zwischen in Umfangsrichtung um die Zentrumsachse Z benachbarten Reflektorflächen 4 befindet sich ein lichttransmittierender Abschnitt 5, der z.B. als Freiraum ausgebildet sein kann, in dem kein Material angeordnet ist. Die Reflektorflächen 4 erstrecken sich in radialer Richtung nicht bis zur Zentrumsachse Z, sondern enden in einem Abstand von der Zentrumsachse Z, sodass um die Zentrumsachse Z herum ein zentraler lichttransmittierender Abschnitt 6 gebildet ist. Der zentrale lichttransmittierende Abschnitt 6 kann als Freiraum ausgebildet sein kann, in dem kein Material angeordnet ist.

Das zweite Lichtreflektorelement 2 ist um einen Winkel von 45° um die Zentrumsachse Z gegenüber dem ersten Lichtreflektorelement 1 gedreht angeordnet. Dies ermöglicht es, dass in Lichteinstrahlrichtung L einstrahlendes Licht, das durch die lichttransmittierenden Abschnitte 5 des ersten Lichtreflektorelements 1 hindurchstrahlt, genau auf die Reflektorflächen 4 des zweiten Lichtreflektorelements 2 trifft.

Die beiden Lichtreflektorelemente 1, 2 sind somit winkelabhängig segmentiert. Die achteckige Grundform ermöglicht eine Reflexion des Lichts an vier Reflektorflächen 4 des ersten Lichtreflektorelements 1, wobei symmetrische Auslassungen in Form der lichttransmittierenden Abschnitte 5 eine Ausleuchtung der vier um 45° gedrehten entsprechenden Reflektorflächen 4 des zweiten Lichtreflektorelements 2 ermöglichen. Statt einer achteckigen Grundform können auch andere Formen gewählt werden. Für die Implementierung von drei Wechselwirkungszonen statt zwei kann eine zwölfeckige Grundform verwendet werden. Grundsätzlich ist die Außenseite eines Lichtreflektorelements 1, 2 nicht auf acht-, zwölfeckige o.ä. Formen beschränkt. Hier wäre z.B. auch eine zylindrische Form denkbar, um diese besser in eine Vakuumröhre einpassen zu können. Weiterhin wäre prinzipiell statt des dargestellten Lichtreflektorelements 1, 2 als monolithisches Bauteil auch ein nicht-monolithisches Bauteil denkbar.

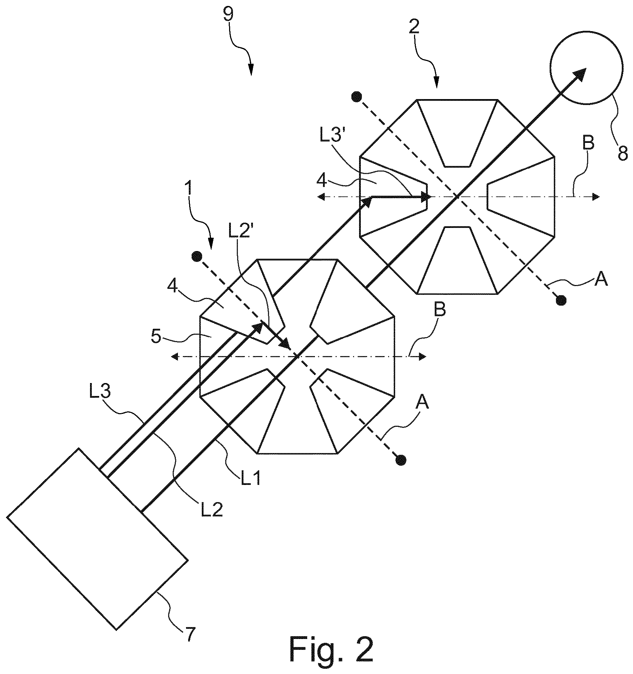

Die Figur 2 zeigt die Reflektoranordnung 9 mit den zwei zu einander verdrehten Lichtreflektorelementen 1, 2 und einen in Lichteinstrahlrichtung L hinter dem zweiten Lichtreflektorelement 2 angeordneten Retroreflexionsspiegel 8. In Lichteinstrahlrichtung L vor dem ersten Lichtreflektorelement 1 ist eine erste Lichtquelle 7 angeordnet. Dargestellt sind zur Veranschaulichung ferner drei Strahlengänge der ersten Lichtquelle 7 in Form von Lichtstrahlen L1, L2, L3. Tatsächlich leuchtet das Lichtfeld der ersten Lichtquelle 7 im Wesentlichen das gesamte erste Lichtreflektorelement 1 aus, sodass Licht an allen vier Reflektorflächen 4 zum Zentrum hin gespiegelt wird.

Man erkennt, dass ein mittiger Lichtstrahl L1 durch die zentralen lichttransmittierenden Abschnitte 6 beider Lichtreflektorelemente 1, 2 hindurchstrahlt und bis zu dem Retroreflexionsspiegel 8 gelangt, wo der Lichtstrahl L1 retroreflektiert wird. Dieser Anteil des Strahlenganges ist für die Interferometrie notwendig.

Am Beispiel des Lichtstrahls L2 wird verdeutlicht, dass dieser Lichtstrahl L2 auf eine Reflektorfläche 4 des ersten Lichtreflektorelements 1 trifft, wo der Lichtstrahl L2 zu einem in Richtung Zentrumsachse Z gerichteten Lichtstrahl L2' umgeleitet wird. Der Lichtstrahl L3 tritt durch einen lichttransmittierenden Abschnitt 5 des ersten Lichtreflektorelements 1 hindurch und gelangt zu einer Reflektorfläche 4 des zweiten Reflektorelements 2, wo der Lichtstrahl L3 zu einem in Richtung Zentrumsachse Z gerichteten Lichtstrahl L3' umgeleitet wird. Diese Strahlenanordung wird für die magnetooptische Falle (MOT) benötigt. Prinzipiell können weitere Lichtreflektorelemente eingesetzt werden. In diesem Fall muss die Geometrie entsprechend angepasst werden, z.B. zwölfeckig für drei Lichtreflektorelemente.

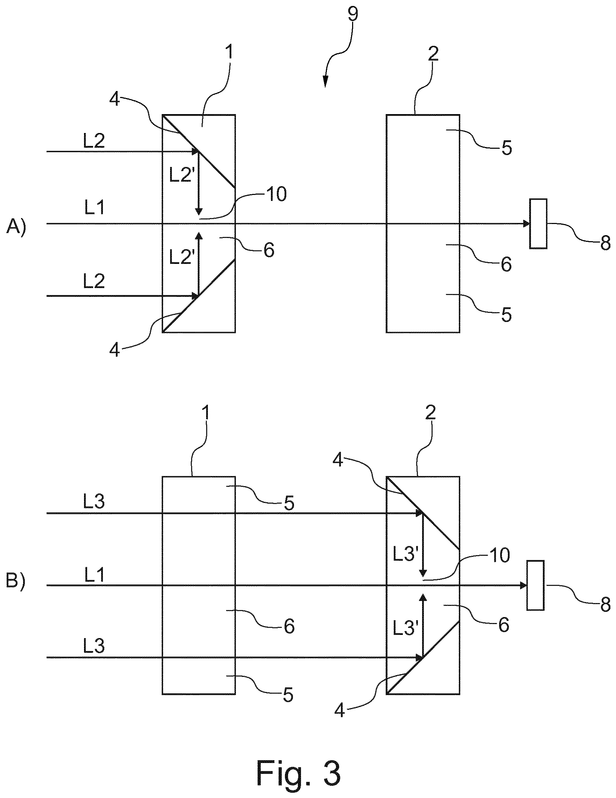

Die Figur 2 zeigt in Bezug auf die Lichtreflektorelemente 1 jeweils eine Schnittebene A und eine dazu winkelversetzt angeordnete Schnittebene B. In Figur 3 ist der Lichtstrahlengang durch die Reflektoranordnung 9 in der Schnittebene A in der oberen Abbildung und der Lichtstrahlengang in der Schnittebene B in der unteren Abbildung dargestellt. Man erkennt insbesondere, dass durch das jeweilige Reflektorelement 1, 2 die an den einander gegenüberliegenden Reflektorflächen 4 eines Paares von Reflektorflächen einstrahlenden Lichtstrahlen L2, L3 derart reflektiert werden, dass die reflektierten Lichtstrahlen L2' bzw. L3' einander entgegengesetzt gerichtet sind und sich an der Zentrumsachse Z (hier überlappend mit dem Lichtstrahl L1 dargestellt) treffen. An dieser Stelle wird eine Wechselwirkungszone 10 zum Kühlen gefangener Atome gebildet. In der Schnittebene A ist erkennbar, dass die Lichtstrahlen L2 an den Reflektorflächen 4 des ersten Lichtreflektorelements 1 zur Zentrumsachse Z hin gespiegelt werden. In der Schnittebene B ist erkennbar, dass die Lichtstrahlen L3 durch das erste Lichtreflektorelement 1 durch die lichttransmittierenden Abschnitte 5 hindurchstrahlen und auf die Reflektorflächen 4 des zweiten Lichtreflektorelements 2 treffen. Dort werden die Lichtstrahlen L3 zur Zentrumsachse Z hin abgelenkt.

## Patentansprüche

1. Lichtreflektorelement (1, 2), das mehrere Reflektorflächen (4) hat, die in einem oder mehreren vordefinierten Winkeln bezüglich einer vordefinierten Lichteinstrahlrichtung (L) des Lichtreflektorelements (1, 2) ausgerichtet sind, wobei die Reflektorflächen (4) um ein Zentrum des Lichtreflektorelements (1, 2), z. B. ringförmig, angeordnet sind, wobei die Reflektorflächen (4) bezüglich des Zentrums des Lichtreflektorelements (1, 2) einander gegenüberliegend angeordnet sind, sodass in Lichteinstrahlrichtung (L) einstrahlendes Licht durch die Reflektorflächen (4) in Lichtstrahlen (L2', L3') abgelenkt wird, die in unterschiedlichen Raumrichtungen aufeinander zu verlaufen und sich in einer Zentrumsachse (Z) treffen, die in Lichteinstrahlrichtung (L) durch das Zentrum hindurch verläuft, **dadurch gekennzeichnet, dass** zwischen in Umfangsrichtung benachbarten Reflektorflächen (4) jeweils ein lichttransmittierender Abschnitt (5) angeordnet ist, durch den das in Lichteinstrahlrichtung (L) einfallende Licht durch das Lichtreflektorelement (1, 2) hindurchstrahlen kann.

2. Lichtreflektorelement nach Anspruch 1, **dadurch gekennzeichnet, dass** eine, mehrere oder alle Reflektorflächen (4) bezüglich der vordefinierten Lichteinstrahlrichtung (L) des Lichtreflektorelements (1, 2) in einem Winkel von 45° ausgerichtet sind.

3. Lichtreflektorelement nach einem der vorhergehenden Ansprüche, **dadurch gekennzeichnet, dass** die Reflektorflächen (4) mit gleichmäßigem Winkelabstand zueinander ringförmig um ein Zentrum des Lichtreflektorelements (1, 2) angeordnet sind.

4. Lichtreflektorelement nach einem der vorhergehenden Ansprüche, **dadurch gekennzeichnet, dass** einer, mehrere oder alle der lichttransmittierenden Abschnitte (5) als Freiraum ausgebildet ist, in dem kein Material angeordnet ist.

5. Lichtreflektorelement nach einem der vorhergehenden Ansprüche, **dadurch gekennzeichnet, dass** die Reflektorflächen (4) in einem Abstand von dem Zentrum angeordnet sind, so dass um das Zentrum herum ein zentraler lichttransmittierender Abschnitt (6) gebildet ist, durch den das in Lichteinstrahlrichtung (L) einfallende Licht durch das Lichtreflektorelement (1, 2) hindurchstrahlen kann.

6. Lichtreflektorelement nach einem der vorhergehenden Ansprüche, **dadurch gekennzeichnet, dass** das Lichtreflektorelement (1, 2) als ein monolithisches Bauteil ausgebildet ist.

7. Reflektoranordnung (9) aufweisend wenigstens ein erstes Lichtreflektorelement (1) nach einem der vorhergehenden Ansprüche und wenigstens ein zweites Lichtreflektorelement (2), das nach einem der vorhergehenden Ansprüche mit, ohne oder mit weniger lichttransmittierenden Abschnitten (5) zwischen in Umfangsrichtung benachbarten Reflektorflächen (4) ausgebildet sein kann, wobei das zweite Lichtreflektorelement (2) in Lichteinstrahlrichtung (L) hinter dem ersten Lichtreflektorelement (1) derart angeordnet ist, dass durch die lichttransmittierenden Abschnitte (5) des ersten Lichtreflektorelements (1) hindurchstrahlendes Licht auf die Reflektorflächen (4) des zweiten Lichtreflektorelements (2) trifft.

8. Reflektoranordnung nach Anspruch 7, **dadurch gekennzeichnet, dass** in Lichteinstrahlrichtung (L) hinter dem zweiten Lichtreflektorelement (2) wenigstens ein Spiegel (8) angeordnet ist, durch den in Lichteinstrahlrichtung (L) einstrahlendes Licht entgegengesetzt zur Lichteinstrahlrichtung (L) zurückreflektiert wird.

9. Atomgerät (20), insbesondere Atominterferometer, mit wenigstens einer Laserlichtquelle (8) und einer Atomfalle, die wenigstens eine erste Wechselwirkungszone (13) zum Kühlen gefangener Atome durch aus entgegengesetzten Richtungen auf die gefangenen Atome einstrahlendes Laserlicht der Laserlichtquelle (8) hat, **dadurch gekennzeichnet, dass** das Atomgerät (20) ein erstes Lichtreflektorelement (1) nach einem der Ansprüche 1 bis 6 hat, wobei die Lichtabstrahlrichtung der Laserlichtquelle (8) in der vordefinierten Lichteinstrahlrichtung (L) des ersten Lichtreflektorelements (1, 2) ausgerichtet ist, wobei die erste Wechselwirkungszone (13) wenigstens zum Teil durch das erste Lichtreflektorelement (1) gebildet ist.

10. Atomgerät nach Anspruch 9, **dadurch gekennzeichnet, dass** die Atomfalle als dreidimensional wirkende Atomfalle ausgebildet ist, wobei die vektoriellen Anteile des aus entgegengesetzten Richtungen auf die gefangenen Atome einstrahlenden Laserlichts in der ersten Wechselwirkungszone (13) alle Raumachsen umfassen.

11. Atomgerät nach einem der Ansprüche 9 bis 10, insbesondere Quanten-Gradiometer, **dadurch gekennzeichnet, dass** das Atomgerät (20) wenigstens zwei voneinander beabstandete Wechselwirkungszonen (13) zum Kühlen gefangener Atome durch aus entgegengesetzten Richtungen auf die gefangenen Atome einstrahlendes Laserlicht hat, wobei das Atomgerät ein zweites Lichtreflektorelement (2) hat, das in Lichteinstrahlrichtung (L) hinter dem ersten Lichtreflektorelement (1) angeordnet ist, wobei eine zweite Wechselwirkungszone (13) wenigstens zum Teil durch das zweite Lichtreflektorelement (2) gebildet ist.

12. Atomgerät nach Anspruch 11, **dadurch gekennzeichnet, dass** das Atomgerät eine Reflektoranordnung (9) nach Anspruch 7 oder 8 hat, wobei eine erste Wechselwirkungszone (10) durch das erste Lichtreflektorelement (1) und eine zweite Wechselwirkungszone (10) durch das zweite Lichtreflektorelement (2) gebildet ist.
